# EUROPÄISCHE PATENTANMELDUNG

(11) **EP 0 700 770 A2**
(43) Veröffentlichungstag der Anmeldung: **13.03.1996**
(21) Anmeldenummer: 95110443.9
(22) Anmeldetag: 05.07.1995
(51) Int. Cl.: B29C 49/64

(54) **Transporteinrichtung für noch warme Vorformlinge**

(30) Priorität: 21.07.1994 DE 4425795
(71) Anmelder: KRUPP MASCHINENTECHNIK GESELLSCHAFT MIT BESCHRÄNKTER HAFTUNG, D-45143 Essen (DE)
(72) Erfinder: Blank, Michael, Dipl.-Ing., D-42113 Wuppertal (DE); Schramm, Klaus, Dr.-Ing., D-45131 Essen (DE)

(57) **Zusammenfassung**

Die Erfindung bezieht sich auf eine Transporteinrichtung zum Halten und Kühlen noch warmer Vorformlinge mit einem Tragrahmen (1) und der Aufnahme eines Vorformlings (10) dienenden Kühlröhren (5), die innenliegende mit einem Kühlmittel beauschlagte Kühlkanäle aufweisen.

Mit der Erfindung wird eine Ausgestaltung der Transporteinrichtung vorgeschlagen, bei welcher die Kühlröhren (5) innenliegende, elastisch verformbare Halteelemente (19) mit im Querschnitt kreisförmigen oder paarweise zusammenwirkenden, im Querschnitt halbkreisförmigen Innenflächen (19c) aufweisen. Die Innenflächen können zwischen einer Öffnungsstellung und einer durch Aufbringen äußerer Kräfte hervorgerufenen Haltestellung derart verändert werden, daß in der letzteren die Innenflächen (19c) zumindest über den größten Teil ihrer Längserstreckung nachgiebig an den Vorformlingen (10) anliegen, während in der Öffnungsstellung der von den Innenflächen festgelegte Querschnitt allseitig größer ist als derjenige der Vorformlinge.
Die Halteelemente (19) sind im übrigen derart ausgebildet, daß sie die in Richtung auf die Vorformlinge geschlossenen Kühlkanäle zumindest mitbilden.

## Beschreibung

Die Erfindung bezieht sich auf eine Transporteinrichtung zum Halten und Kühlen noch warmer Vorformlinge, mit einem Tragrahmen und an diesem gehaltenen, der Aufnahme jeweils eines Vorformlings dienenden Kühlröhren, die auf ihrer vom Tragrahmen abgewandten Seite eine Durchtrittsöffnung nebst Anschlagfläche für den Gewindeabschlußkragen des aufzunehmenden Vorformlings aufweisen und innenliegende, mit einem Kühlmittel beaufschlagte Kühlkanäle aufweisen, die an eine Kühlmittelführung angeschlossen und derart ausgebildet sind, daß die in den Kühlröhren befindlichen Vorformlinge der vom Kühlmittel ausgehenden Kühlwirkung ausgesetzt sind.

Bei den Vorformlingen handelt es sich um röhrenförmige Kunststoffkörper mit einem geschlossenen Boden und mit einem diesem bezüglich des länglichen Mittelabschnitts gegenüberliegenden Befestigungsabschnitt. Die Transporteinrichtung - welche an einer geeigneten Führung beweglich und bezüglich dieser schwenkbar gehalten ist - ermöglicht es, die noch warmen Vorformlinge von einer Arbeitsstation zu übernehmen, festzuhalten, währenddessen zu kühlen und anschließend zum Zwecke der Zwischenlagerung oder Weiterbehandlung abzulegen. Als Arbeitsstation, von welcher die Vorformlinge mittels der Transporteinrichtung zu übernehmen sind, kommen insbesondere Druckgießmaschinen (d.h. beispielsweise Spritzgieß- oder Extrudergießmaschinen) in Frage.

Bei einer Transporteinrichtung der eingangs erwähnten Gattung - beschrieben in der Druckschrift EP 0 266 904 B1 - sind die Kühlröhren auf dem wesentlichen Teil ihrer Längserstreckung mit wendelförmigen Kühlkanälen ausgestattet, in welche von außen Kühlmittel eingeleitet werden kann; die Kühlkanäle liegen dabei innerhalb des Mantels der Kühlröhren, sind also durch den den Vorformlingen zugewandten Teil des Mantels von diesen abgetrennt. Auch zum Festhalten der Vorformlinge in den Kühlröhren läßt sich eine Einziehkraft durch einen Unterdruck hervorrufen, an den die Endabschnitte der Kühlröhren in der Nähe der Vorformlingsböden anschließbar sind.
Weitergehende Einzelheiten über das Zusammenwirken der bekannten Transporteinrichtung mit einer Spritzgießmaschine finden sich in der Druckschrift EP 0 173 818 B1.
Unter dem Gesichtspunkt eines vereinfachten Aufbaus und einer verbesserten Temperaturregelung sind bei der gattungsgemäßen Transporteinrichtung die Kühlröhren der Konizität der aufzunehmenden Vorformlinge angepaßt und ihre Aufnahmeräume derart bemessen, daß die Vorformlinge - satt in den Kühlröhren anliegend - in diese mit der beim Abkühlen auftretenden Schrumpfung hineingleiten. Dadurch soll sichergestellt werden, daß die Vorformlinge eine Zentrierung und wirksame Temperaturbeeinflussung erfahren.

Aus der Veröffentlichung DE 42 12 115 A1 ist eine ebenfalls gattungsgemäße Transporteinrichtung bekannt, bei welcher - abweichend vom zuvor beschriebenen Stand der Technik (EP 0 266 804 B1) - der Durchmesser der Aufnahmeräume größer bemessen ist als der Durchmesser des aufzunehmenden Vorformlings und die Kühlkanäle bezüglich der Aufnahmeräume derart angeordnet sind, daß die Vorformlinge dort unmittelbar mit Kühlmittel beaufschlagbar sind. Durch Anwendung der Direktkühlung soll auch ohne Anlage der Vorformlinge an der Innenfläche der Kühlröhren eine intensive Kühlung erreicht werden. Die in Rede stehende Transporteinrichtung ist zusätzlich mit Mitteln ausgerüstet, über welche innerhalb der Kühlröhren eine an den Vorformlingen in Richtung auf den Tragrahmen angreifende Einziehkraft ausgelöst werden kann.

Der Erfindung liegt die Aufgabe zugrunde, eine gattungsgemäße Transporteinrichtung in der Weise auszugestalten, daß die Vorformlinge anläßlich ihrer Übernahme in die Kühlröhren innerhalb dieser praktisch sofort in ihre Endstellung (Einziehstellung) überführt und dann mit sie auch festhaltenden, lageveränderlichen Kühlflächen in Kontakt gebracht werden.
Die neuartige Transporteinrichtung macht dabei von dem bereits bekannten Gedanken der indirekten Kühlung Gebrauch, d.h. die Vorformlinge werden der von Kühlflächen ausgehenden Kühlwirkung ausgesetzt. Abhängig von den vorgegebenen konstruktiven Verhältnissen kann die neuartige Transporteinrichtung in an sich bekannter Weise auch mit Mitteln ausgestattet sein, welche das Einbringen (und Festhalten) und/oder Ausbringen der Vorformlinge aus der Transporteinrichtung ermöglichen oder zumindest unterstützen (vgl. dazu die bereits erwähnte DE 42 12 115 A1).

Die Aufgabe wird durch eine Trageinrichtung mit den Merkmalen des Anspruchs 1 gelöst.
Der Grundgedanke der Erfindung besteht danach darin, die Kühlröhren mit innenliegenden, elastisch verformbaren Halteelementen auszustatten, deren den Vorformlingen zugewandte Innenflächen sich über den wesentlichen Teil der Längserstreckung der Vorformlinge erstrecken, d.h. den Bereich in der Nähe der Gewindeabschlußschulter der Vorformlinge bis zumindest zum Vorformlingsboden erfassen. Die Innenflächen sind dabei entweder im Querschnitt kreisförmig oder - bei paarweise zusammenwirkenden Innenflächen - im Querschnitt halbkreisförmig ausgebildet.
Sie können zwischen einer Öffnungsstellung (zum Ein- bzw. Ausbringen der Vorformlinge in die bzw. aus den Kühlröhren) und einer durch Aufbringen äußerer Kräfte hervorgerufenen Haltestellung derart verändert werden, daß in der Haltestellung die Innenflächen zumindest über den größten Teil ihrer Längserstreckung nachgiebig an den Vorformlingen anliegen, wobei in der Öffnungsstellung der von den Innenflächen (also gegebenenfalls auch von zwei zusammenwirkenden Innenflächen) festgelegte Querschnitt allseitig größer ist als derjenige der Vorformlinge. Durch die nachgiebige Anlage der Halteelemente an den Vorformlingen in der Haltestellung ist in einfacher Weise sichergestellt, daß die Vorformlinge über den größten Teil ihrer Längserstreckung eine Zentrierung und wirksame Kühlung erfahren sowie bezüglich der Kühlröhren in einer definierten Lage festgehalten werden, wobei sich der von den Innenflächen begrenzte Querschnitt selbsttätig und weitgehend an die sich während des Kühlvorgangs ergebenden Querschnittsänderungen der Vorformlinge anpaßt.
Je nach der Ausgestaltung des Erfindungsgegenstandes können zumindest die Innenflächen der Halteelemente pneumatisch, hydraulisch und/oder mechanisch durch Verformung und/oder geeignete Bewegung aus der Öffnungsstellung in die Haltestellung und umgekehrt überführt werden. Im Rahmen der Erfindung kann das Kühlmittel - gegebenenfalls auch zusätzlich - dazu eingesetzt werden, durch Aufbau eines geeigneten Kühlmitteldrucks in den Kühlkanälen die erforderliche elastische Verformung herbeizuführen, welche die Halteelemente über ihre Innenflächen feinfühlig und nachgiebig an den Vorformlingen in Anlage hält. Die Transporteinrichtung kann vorzugsweise auch mit Mitteln ausgestattet sein, welche es ermöglichen, die von den Innenflächen ausgehende Anlagekraft in Abhängigkeit von der Zeitdauer kontinuierlich, stufenweise oder intermittierend zu verändern. Dies läßt sich beispielsweise dadurch bewirken, daß der die elastische Verformung hervorrufende Kühlmitteldruck - insbesondere durch zeitgesteuerte Druckventile - entsprechend beeinflußt wird.
Falls die Kühlröhren paarweise zusammenwirkende, im Querschnitt halbkreisförmige Innenflächen aufweisen, läßt sich der von diesen festgelegte Querschnitt bereits dadurch verändern, daß die beiden Innenflächen aufeinander zu- bzw. voneinander wegbewegt werden. Bei Ausführungsformen mit im Querschnitt kreisförmigen Innenflächen kann die erforderliche Querschnittsveränderung durch Dehnung zumindest eines Teiles der betreffenden Innenfläche ausgelöst werden. Die mit der Überführung in die Öffnungsstellung verbundene Vergrößerung des den Vorformling aufnehmenden Querschnitts muß lediglich derart bemessen sein, daß das Einbringen in die bzw. Ausbringen aus der Kühlröhre ohne oder allenfalls mit vernachlässigbarem Kraftaufwand bewirkt werden kann.

Der Erfindungsgegenstand kann dadurch weiter ausgestaltet sein, daß die Kühlröhren in zumindest einem Klemmbackenpaar ausgebildet sind, d.h. die Kühlröhren nebst Halteelementen sind jeweils Bestandteil zweier zusammenwirkender, relativ zueinander beweglicher Klemmbacken.

Im einzelnen umfaßt die in Rede stehende Ausgestaltung (gemäß Anspruch 2) folgende Merkmale:
Die in zumindest einem Klemmbackenpaar ausgebildeten Kühlröhren weisen Halteelemente auf, die in der Haltestellung einen Kreisquerschnitt begrenzen. Die Klemmbacken jedes Klemmbackenpaares sind quer zur Längserstreckung der Kühlröhren federnd derart abgestützt, daß eine in Richtung auf die Haltestellung wirksame Schließkraft vorhanden ist, und mittels eines Verstellantriebs in Richtung oder entgegen der Schließkraft relativ zueinander quer verschiebbar. Durch die federnde Abstützung der jeweils zusammenwirkenden Klemmbacken ist sichersgestellt, daß sich der von den Innenflächen der zugehörigen Halteelemente begrenzte Querschnitt selbsttätig an Querschnittsänderungen des an den Innenflächen anliegenden Vorformlings anpassen kann.

In Abhängigkeit von der Anzahl der aufzunehmenden und zu kühlenden Vorformlinge kann der Erfindungsgegenstand auch mit mehreren Klemmbackenpaaren ausgestattet sein, die jeweils federnd aneinander abgestützt nebeneinander angeordnet sind (Anspruch 3).
Vorzugsweise sind die Klemmbacken über den Verstellantrieb derart gekuppelt, daß gleichartig angeordnete Klemmbacken jedes Klemmbackenpaares jeweils gleichzeitig und gleichsinnig bewegt werden (Anspruch 4). Falls also die Klemmbackenpaare nebeneinander angeordnet sind, können danach einerseits die jeweils links liegenden und andererseits die jeweils rechts liegenden Klemmbacken der Klemmbackenpaare gemeinsam hin- und herbewegt werden.
Vorzugsweise sind die Klemmbackenpaare in einem gemeinsamen Rahmen gehalten, welcher auch die Klemmbacken abstützende Führungen aufweist. Als Verstellantrieb kommen insbesondere Pneumatikzylinder in Betracht, die an den beiden äußeren Klemmbacken angreifen und über diese mittelbar die inneren Klemmbacken mitbewegen.

Die Ausführungsform nach den Ansprüchen 2 bis 4 kann Halteelemente aufweisen, die jeweils an beiden Klemmbacken jedes Klemmbackenpaares befestigt sind (Anspruch 5). Dabei kommen Halteelemente mit im Querschnitt kreisförmigen Innenflächen zur Anwendung, die - abhängig von der gegenseitigen Lage der zusammenwirkenden Klemmbacken - gegebenenfalls eine mehr oder weniger große Dehnung erfahren und einen unterschiedlich großen Querschnitt begrenzen. Die Verwendung derartiger Halteelemente ist insofern von Vorteil, als deren Innenflächen auch dann einen im Querschnitt geschlossenen Aufnahmeraum begrenzen, falls die zusammenwirkenden Klemmbacken nicht aneinander anliegen.
Als Alternative kommt eine Ausgestaltung in Betracht, bei welcher die Halteelemente jeder Klemmbacke jeweils eine im Querschnitt halbkreisförmige Innenfläche aufweisen und jeweils an einer Klemmbacke befestigt sind; die zusammenwirkenden Innenflächen sind dabei einander derart zugeordnet, daß sie in der Haltestellung miteinander einen kreisförmigen Querschnitt begrenzen (Anspruch 6). Die in Rede stehende Ausgestaltung unterscheidet sich dadurch von der Ausgestaltung nach Anspruch 5, daß jeder Kühlröhre zwei voneinander getrennte Halteelemente mit entsprechend geformten Innenflächen zugeordnet und Bestandteil verschiedener Klemmbacken sind. Vorzugsweise sind die Halteelemente derart verformbar ausgebildet, daß sie auch dann einen im Querschnitt annähernd geschlossenen Aufnahmeraum begrenzen, falls zwischen den zugehörigen Klemmbacken oder den zusammenwirkenden Halteelementen - wie im Normalfall beispielsweise während des Schrumpfungsvorgangs der Vorformlinge erforderlich - ein Arbeitsspalt vorhanden ist.

Die Halteelemente können insbesondere jeweils als Hohlkörper ausgebildet sein (Anspruch 7); bei einer derartigen Ausgestaltung sind die Kühlkanäle in den Halteelementen selbst angeordnet.
Zur Aussteifung und/oder zur Beeinflussung der Bewegung des Kühlmittels innerhalb der Hohlkörper können diese zusätzlich innenliegende Längswände aufweisen (Anspruch 8).

Bei einer besonders einfach ausgebildeten Ausführungsform des Erfindungsgegenstandes bestehen die Halteelemente jeweils aus einem Schlauchabschnitt, der außerhalb des Bereichs seiner Innenfläche bezüglich der Kühlröhre ortsfest gehalten ist (Anspruch 9).
Gegebenenfalls kann der Schlauchabschnitt dabei auf seiner der Innenfläche gegenüberliegenden Seite vorspringende Längsrippen aufweisen (Anspruch 10); diese können auch in Längsrichtung kürzer ausgebildet sein als die an den Vorformlingen anliegende Innenfläche des Schlauchabschnitts und/oder in dessen Längsrichtung gegeneinander versetzt angeordnet sein.
Die Kühlkanäle lassen sich bei der in Rede stehenden Ausführungsform in einfacher Weise dadurch verwirklichen, daß zwischen dem Schlauchabschnitt und der Wandung der Kühlröhre ein mit einem Kühlmittel beaufschlagbarer Kühlmittelraum vorhanden ist (Anspruch 11).
Zur Befestigung und gegebenenfalls Abdichtung gegen die Umgebung ist der Anfangs- und Endbereich des Schlauchabschnitts zweckmäßig im Querschnitt U-förmig ausgebildet, wobei sich zumindest der außenliegende Schenkel des Anfangsbereichs an der Wandung der Kühlröhren abstützt (Anspruch 12).

Eine andere Ausführungsform des Erfindungsgegenstandes ist dadurch gekennzeichnet, daß die Halteelemente jeweils aus einem im Außenquerschnitt rechteckförmigen Schlauchabschnitt bestehen, der innerhalb der Wandung der Kühlröhre gewendelt gehalten ist und dessen spiralförmig verlaufender Hohlraum von einem Kühlmittel durchflossen wird (Anspruch 13). Der Grundgedanke dieser Ausgestaltung besteht also in der Verwendung von Halteelementen, die aus wendelförmig innerhalb der Kühlröhre verlegten Schlauchabschnitten bestehen, wobei die gegebenenfalls an den Vorformlingen anliegenden Innenflächen von dem Innenumfang dieser Wendel gebildet werden. Diese weist dementsprechend einen nach außen hin - also gegen den Vorformling und gegen die Wandung der Kühlröhre - geschlossenen Kühlkanal auf.
Die für die Überführung in die Haltestellung erforderliche Durchmesserveränderung der Wendel läßt sich dadurch herbeiführen, daß in dem elastisch verformbaren Schlauchabschnitt ein geeigneter Kühlmitteldruck eingestellt wird.
Der gewendelte Schlauchabschnitt sollte in der Weise angeordnet sein, daß er auf der von der Wandung der Kühlröhre abgewandten Seite eine zumindest annähernd durchgehende Innenfläche bildet (Anspruch 14); auf diese Weise läßt sich über die vom Schlauchabschnitt erfaßte Länge des Vorformlings eine weitgehend gleichmäßige Kühlwirkung erzielen.

Der Erfindungsgegenstand kann vorteilhaft auch in der Weise ausgestaltet sein, daß die Halteelemente jeweils aus einem Rohrabschnitt bestehen, der nach Art eines Faltenbalges ausgebildet ist und sich über in Richtung auf die Wandung der Kühlröhre vorkragende Vorsprünge nach außen abstützt (Anspruch 15). Bedingt durch die elastische Verformbarkeit, die insbesondere durch die Vorsprünge hervorgerufen ist, läßt sich der Innendurchmesser des Faltenbalg-Rohrabschnitts durch eine geeignete Kraftbeaufschlagung bis zur Anlage am Vorformling verkleinern.
Die Kühlung des Faltenbalg-Rohrabschnitts kann dadurch bewirkt werden, daß der zwischen dem Rohrabschnitt und der Wandung der Kühlröhre vorhandene Zwischenraum von einem Kühlmittel durchflossen ist (Anspruch 16). Vorzugsweise bilden die Vorsprünge eine Wendel, die an der Wandung der Kühlröhre anliegt (Anspruch 17).
Die Überführung des Faltenbalg-Rohrabschnitts in die Haltestellung und seine Anpassung an die Schrumpfung des Vorformlings läßt sich dadurch bewirken, daß er über ein Stellelement bezüglich seines ortsfesten Anfangsbereichs verschiebbar ist (Anspruch 18).

Bei der zuletzt angesprochenen Ausführungsform (Ansprüche 15 bis 18) können die Vorsprünge insbesondere auch nach Art von Gewindestegen ausgebildet sein, d.h. aus geradlinigen Stegflanken bestehen, die auf der der Wandung der Kühlröhre zugewandten Seite ineinander übergehen.

Die Halteelemente können grundsätzlich aus jedem Werkstoff bestehen, welcher bei ausreichender Elastizität den hier zu beachtenden Anforderungen entspricht. Insbesondere können Kunststoffe auf Elastomerbasis Verwendung finden.
Falls die nach Art eines Faltenbalges ausgebildeten Schlauchabschnitte aus Metall gefertigt sind, sollte die Transporteinrichtung im Regelfall eine Ausschubvorrichtung aufweisen, welche das Ausbringen der Vorformlinge zumindest unterstützt.

Die Erfindung wird nachfolgend anhand mehrerer in der Zeichnung dargestellter Ausführungsbeispiele im einzelnen erläutert.

Es zeigen:
- Fig. 1: schematisiert den Aufbau einer Transporteinrichtung (ohne Antriebseinheit und Führungsbahn),
- Fig. 2: in gegenüber Fig. 1 vergrößertem Maßstab einen Teilschnitt im Eckbereich durch die Transporteinrichtung nebst Vorformling in der waagerechten Übernahmestellung,
- Fig. 3 und 3a: einen Teilschnitt durch eine Transporteinrichtung mit einem innerhalb der Kühlröhre angeordneten Halteelement in Form eines Schlauchabschnitts, der lediglich an seinem Anfangs- und seinem Endbereich bezüglich der Kühlröhre ortsfest gehalten ist, bzw. in verändertem Maßstab als Einzelheit einen Teilschnitt durch den in Fig. 3 dargestellten Schlauchabschnitt,
- Fig. 4: einen Teilschnitt durch eine Transporteinrichtung mit einem Halteelement in Form eines gewendelten, im Außenquerschnitt rechteckförmigen Schlauchabschnitts,
- Fig. 5 und 5a: einen Teilschnitt durch eine Transporteinrichtung mit einem Halteelement in Form eines Faltenbalg-Schlauchabschnitts und einer mechanischen Ausschiebevorrichtung für den Vorformling bzw. in vergrößertem Maßstab als Einzelheit einen Teilschnitt durch den in Fig. 5 dargestellten Faltenbalg-Schlauchabschnitt,
- Fig. 6: einen Teilschnitt durch eine Transporteinrichtung mit einem Halteelement in Form eines Faltenbalg-Schlauchabschnitts nebst Stellelement und pneumatisch wirkender Ausschiebevorrichtung,
- Fig. 7: schematisiert eine Ausführungsform des Erfindungsgegenstandes mit in mehreren Klemmbackenpaaren ausgebildeten Kühlröhren, wobei die Klemmbackenpaare in einem gemeinsamen Rahmen gehalten und mit einem Verstellantrieb in Form mehrerer Pneumatikzylinder ausgestattet sind,
- Fig. 7a: in gegenüber Fig. 7 vergrößertem Maßstab eine Teilansicht der Ausgestaltung mit Klemmbackenpaaren,
- Fig. 8a bis 8c: einen Teilschnitt durch ein Klemmbackenpaar, dessen Kühlröhre mit zwei zusammenwirkenden Hohlkörpern ausgestattet ist, deren Innenflächen gemeinsam einen zumindest annähernd kreisförmigen Querschnitt begrenzen, bzw. einen Schnitt nach Linie VIII-VIII in Fig. 8b,
- Fig. 9a bis 9c: einen Schnitt durch ein Klemmbackenpaar, dessen Kühlröhre mit zwei Halteelementen mit radial ausgerichteten Längsrippen ausgestattet ist, bzw. einen Schnitt nach Linie IX-IX in Fig. 9b,
- Fig. 10: einen Teilschnitt durch eine den Fig. 8a bis c ähnliche Ausführungsform, bei welcher sich die Klemmbacken jedes Klemmbackenpaares über Abstandselemente aneinander abstützen, und
- Fig. 11: einen Teilschnitt durch eine den Fig. 9a bis c ähnliche Ausführungsform, bei welcher sich die Klemmbacken jedes Klemmbackenpaares über Abstandselemente aneinander abstützen.

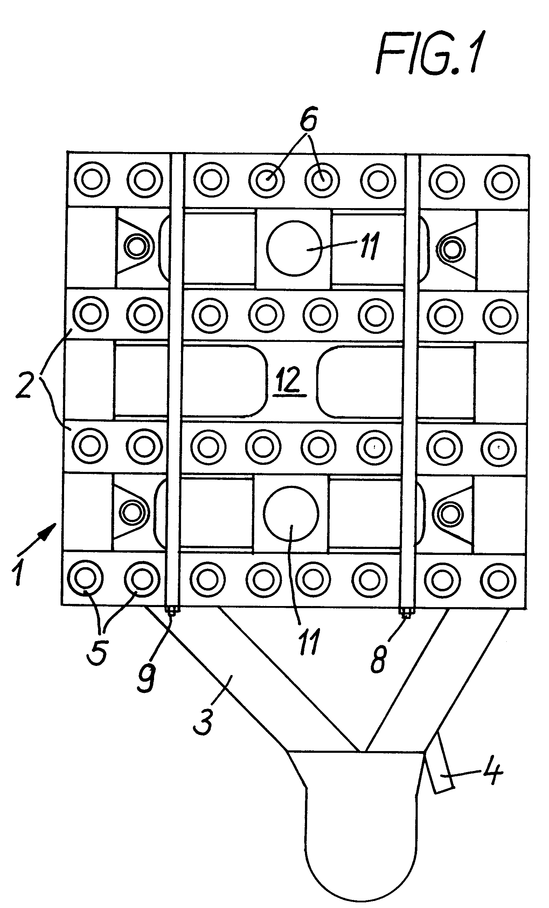

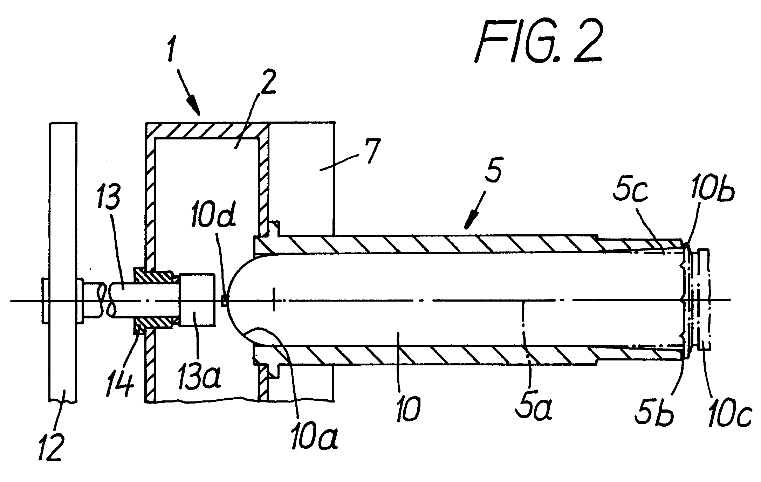

Ein Ausführungsbeispiel für den grundsätzlichen, an sich bekannten Aufbau einer Transporteinrichtung zum Halten und Kühlen noch warmer Vorformlinge aus Kunststoff, die nach dem Gießen aus einer geöffneten Gießform übernommen, gekühlt und weiterbefördert werden müssen, ist aus Fig. 1 und 2 ersichtlich.

Die Transporteinrichtung weist in diesem Fall einen Tragrahmen 1 mit vier Kammern 2 auf, der über eine Konsole 3 mittels einer nicht dargestellten Antriebseinheit derart verfahrbar ist, daß die zunächst waagerecht liegenden Vorformlinge in eine lotrechte Ablagestellung überführt und in dieser nach unten freigesetzt werden können.
Jede Kammer 2, die über einen an der Konsole 3 angebrachten Anschlußstutzen 4 an eine Unterdruckquelle angeschlossen ist, weist mehrere im wesentlichen zylindrische Kühlröhren 5 auf, deren Aufnahmeraum 6 in die zugehörige Kammer 2 einmündet.
Auf der den Kühlröhren zugewandten Seite sind den Kammern 2 Kühlmittelführungen in Form einer (in Fig. 2 schematisch dagestellten) Kühlleiste 7 zugeordnet, über welche ein fluides Kühlmittel in den Bereich der Kühlröhren geleitet bzw. aus diesen abgeführt werden kann; die mit dem Kühlmittel beaufschlagten innenliegenden Kühlkanäle und die weiter unten angesprochenen Halteelemente sind in Fig. 2 nicht dargestellt. Die Zuführ- und Abflußleitung, über welche das Kühlmittel in den Bereich der Kühlleiste 7 gelangt bzw. aus deren Bereich abgeleitet wird, sind in Fig. 1 schematisch dargestellt und mit 8 bzw. 9 bezeichnet.

Auf der den Kühlröhren 5 gegenüberliegenden Seite des Tragrahmens 1 ist eine Ausstoßeinrichtung zum Ausschieben der in den Kühlröhren aufgenommenen Vorformlinge 10 angeordnet. Diese besteht aus zwei am Tragrahmen 1 befestigten, doppeltwirkenden Zylinderaggregaten 11, über welche eine Auswerferplatte 12 relativ zum Tragrahmen 1 hin- und herbewegt werden kann. Von der Auswerferplatte gehen koaxial zur Kühlrohr-Längsachse 5a liegende Auswerferstifte 13 aus; diese ragen - über Führungsbuchsen 14 axial beweglich abgestützt - in Abhängigkeit von der Stellung der Auswerferplatte 12 mehr oder weniger weit in die Kammern 2 bzw. Aufnahmeräume 6 hinein und leiten mit ihrer Bewegung nach rechts das Ausschieben der Vorformlinge ein, sobald ihr Kopf 13a an dem gewölbten Vorformlingsboden 10a zur Anlage gekommen ist.
Der in den Kammern 2 eingestellte Unterdruck löst eine an den Vorformlingen in Richtung auf den Tragrahmen 1 angreifende Einziehkraft aus. Diese hat so lange eine entsprechende Einziehbewegung der Vorformlinge zur Folge, bis deren Gewindeabschlußschulter 10b sich an der Anschlagfläche 5b der Kühlröhren abstützt, welche deren Durchtrittsöffnung 5c festlegt; das Gewinde der Vorformlinge, welches erforderlichenfalls deren Befestigung in einer Behandlungsstation ermöglicht, ist mit 10c bezeichnet.
Der Kopf 13a des Auswerferstifts ist mit einer kleinen Ausnehmung ausgestattet, in welche gegebenenfalls der Angußfaden 10d des Vorformlings mit Abstand hineinragt.

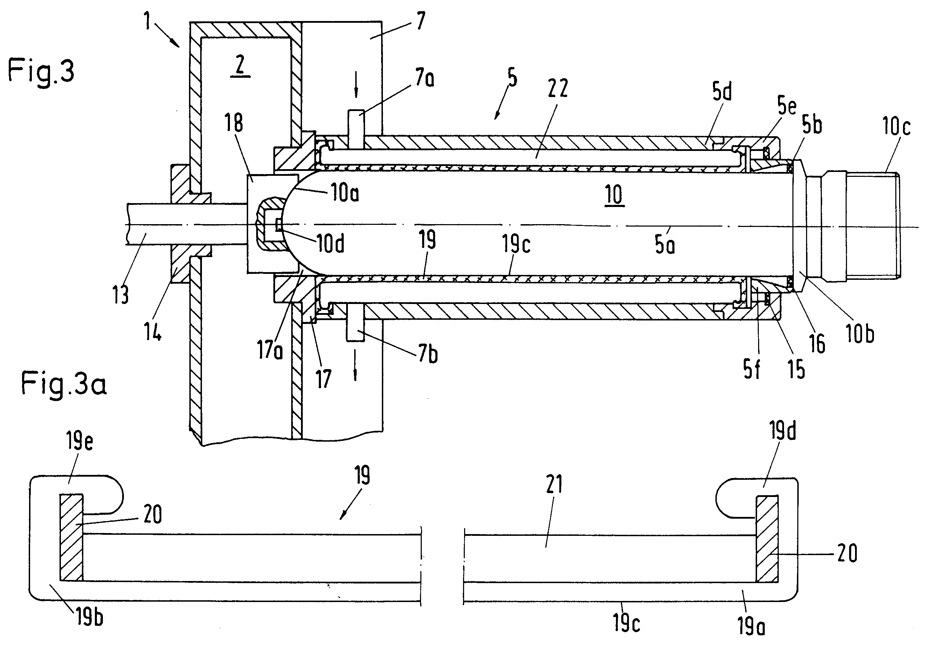

Bei der Ausführungsform gemäß Fig. 3 weist die Kühlröhre 5 eine Wandung 5d und einen daran befestigten Vorderabschnitt 5e auf, mit dem ein Anschlagstück 5f in Verbindung steht; an diesem ist die bereits erwähnte Anschlagfläche 5b ausgebildet. Die Teile 5e und 5f sind in der Nähe der Anschlagfläche 5b mit einem zwischen ihnen aufgenommenen Dichtring 15 ausgestattet. Auch die Anschlagfläche 5b ist auf ihrer der Gewindeabschlußschulter 10b zugewandten Seite mit einem Dichtring 16 ausgestattet, welcher den Zwischenraum zwischen dem Vorformling 10 und dem Anschlagstück 5f überbrückt. Die Kühlröhre 5 ist an einen Kühlmittelkreislauf anschließbar, dessen schematisch dargestellter Zuführ- und Auslaßabschnitt 7a bzw. 7b Bestandteil der Kühlleiste 7 ist und über diese mit der (in Fig. 1 dargestellten) Zuführleitung 8 bzw. Abflußleitung 9 in Verbindung steht.
Die Wandung 5d ist im Bereich des Vorformlingsbodens 10a über ein buchsenartiges Flanschstück 17 an dem Tragrahmen 1 befestigt, welches in die Kammer 2 hineinragt. Jeder Auswerferstift 13 (vgl. dazu auch Fig. 2) ist auf der der zugehörigen Kühlröhre 5 zugewandten Seite mit einem Bodenkühleinsatz 18 ausgestattet, der in der angedeuteten Stellung mit Spiel in die Öffnung 17a des Flanschstücks 17 hineinragt. Die Ausbildung und Funktion des Bodenkühleinsatzes 18 sind im einzelnen in der Druckschrift DE 42 12 115 A1 beschrieben und dargestellt. Durch Verschieben des Auswerferstifts 13 in Richtung auf die Anschlagfläche 5b kann der Vorformling aus der Kühlröhre ausgeschoben werden.

Innerhalb der Wandung 5d ist die Kühlröhre 5 mit einem elastisch verformbaren Halteelement in Form eines Schlauchabschnitts 19 ausgestattet, dessen Anfangsbereich 19a dem Anschlußstück 5f benachbart ist und dessen Endbereich 19b sich in Höhe des Vorformlingsbodens 10a an dem Flanschstück 17 abstützt. Der Schlauchabschnitt 19 bildet somit über seine dem Vorformling 10 zugewandte Innenfläche 19c die flexible Begrenzung des Aufnahmeraums 6 (vgl. dazu Fig. 1), die sich bis in die Nähe der Anschlagfläche 5b erstreckt; dabei ist der Schlauchabschnitt 19 lediglich über seinen Anfangs- und seinen Endbereich 19a bzw. 19b bezüglich der Kühlröhre 5 ortsfest gehalten. Zu diesem Zweck sind die Bereiche 19a und 19b im Querschnitt U-förmig ausgestaltet, wobei sich der außenliegende Schenkel 19d bzw. 19e unter Bildung einer Dichtstelle an der Wandung 5d abstützt. Zur Aussteifung sind der Anfangs- und Endbereich 19a bzw. 19b jeweils mit einer Scheibe 20 ausgestattet, die in den außenliegenden Schenkel 19d bzw. 19e eingreift (vgl. dazu Fig. 3a).
Bei der dargestellten Ausführungsform ist der Schlauchabschnitt 19 mit radialen Längsrippen 21 ausgestattet, die in Richtung auf den Außenmantel 5d vorspringen. Diese Längsrippen können auch derart ausgebildet sein, daß sie sich lediglich über einen Teil der Länge des Schlauchabschnitts erstrecken und dabei in Längsrichtung gegeneinander versetzt liegen.

Zwischen dem Schlauchabschnitt 19 und der Wandung 5d ist ein Ringraum 22 vorhanden, welcher über den Zuführ- und Auslaßabschnitt 7a bzw. 7b mit einem Kühlmittel beaufschlagt werden kann. Der Schlauchabschnitt 19 ist dabei derart ausgebildet, daß er - ausgehend von seiner unbelasteten Öffnungsstellung - durch geeignete Einstellung des Kühlmitteldrucks in eine Haltestellung überführt werden kann, in welcher sich die Innenfläche 19c nachgiebig an den Vorformling 10 anlegt, diesen dabei zentriert und einer intensiven Kühlwirkung aussetzt. In der Öffnungsstellung nimmt die Innenfläche 19c selbsttätig eine Lage ein, in welcher der von ihr festgelegte Durchmesser größer ist als derjenige des Vorformlings, so daß dieser ohne wesentlichen Widerstand aus der Kühlröhre 5 austreten kann.

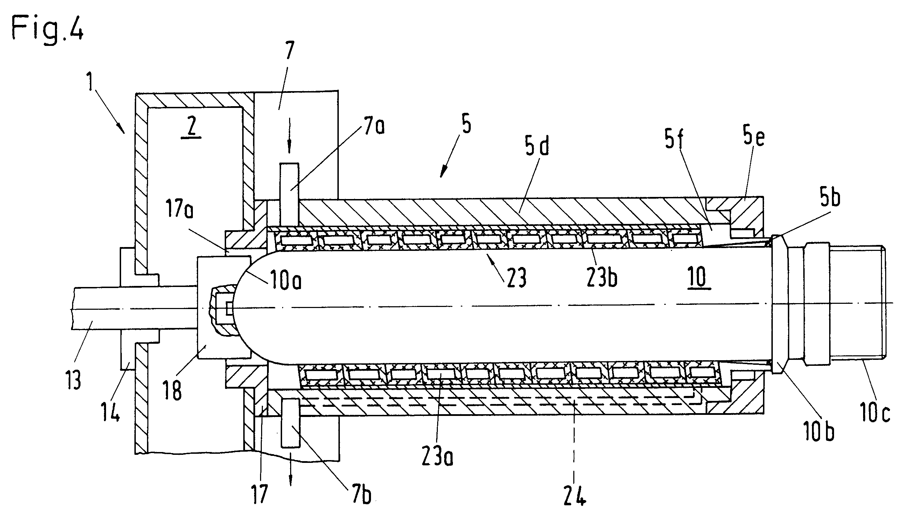

Bei der Ausführungsform gemäß Fig. 4 besteht das Halteelement aus einem im Außenquerschnitt rechteckförmigen Schlauchabschnitt 23, der innerhalb der Wandung 5d der Kühlröhre 5 gewendelt gehalten ist und dessen spiralförmig verlaufender Hohlraum 23a von einem Kühlmittel durchflossen wird. Die Lage des Schlauchabschnitts 23 in der Nähe der Anschlagfläche 5b wird dabei durch das entsprechend ausgebildete Anschlagstück 5f festgelegt.
Der Schlauchabschnitt ist in der Nähe des Flanschstücks 17 an den Zuführabschnitt 7a und in der Nähe des Anschlagstücks 5f über eine schematisch dargestellte, in der Wandung 5d verlaufende Rücklaufleitung 24 an den Auslaßabschnitt 7b des Kühlmittelkreislaufs angeschlossen. Die in Rede stehende Darstellung läßt erkennen, daß der gewendelte Schlauchabschnitt in der Weise angeordnet ist, daß er auf der von der Wandung 5d abgewandten Seite eine zumindest annähernd durchgehende Innenfläche 23b bildet.
Durch entsprechende Druckbeaufschlagung des Kühlmittels kann der Schlauchabschnitt - ausgehend von seiner unbelasteten Öffnungsstellung - derart verformt werden, daß die Innenfläche 23b nachgiebig an dem aufgenommenen Vorformling 10 anliegt.
Die hier angesprochene Ausführungsform unterscheidet sich auch dadurch von der Ausführungsform gemäß Fig. 3 und 3a, daß der spiralförmig ausgebildete Kühlkanal innerhalb des Schlauchabschnitts 23 selbst verläuft.

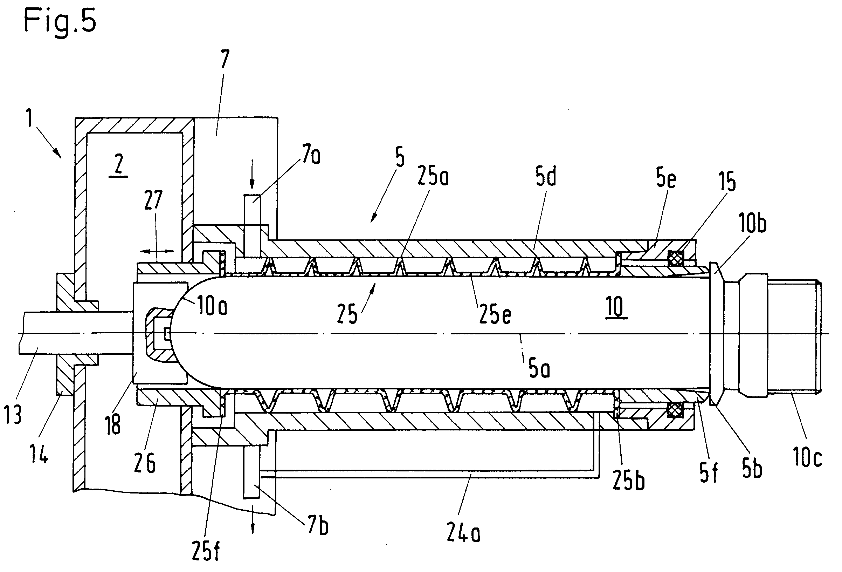

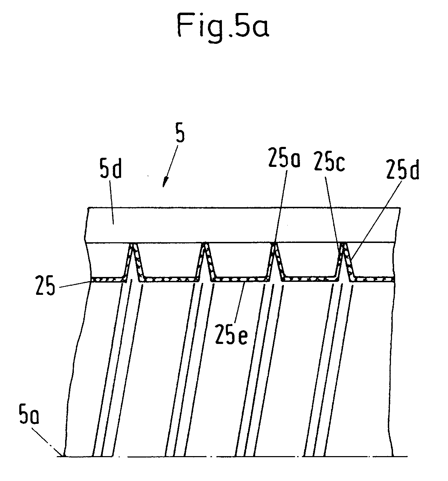

Der Erfindungsgegenstand kann als Halteelemente auch Rohrabschnitte 25 aufweisen, die nach Art eines elastisch verformbaren Faltenbalges ausgebildet sind (Fig. 5 und 5a). Jeder Rohrabschnitt weist dabei Vorsprünge 25a auf, die in Richtung auf die Wandung 5d vorkragen und sich nach außen an dieser abstützen. Der in der Nähe der Anschlagfläche 5b liegende Anfangsbereich 25b des Rohrabschnitts ist zwischen den Teilen 5d und 5e geklemmt sowie an dem Anschlagstück 5f abgestützt und dadurch bezüglich der Kühlröhre 5 ortsfest gehalten.
In dem dargestellten Ausführungsbeispiel werden die Vorsprünge 25a von gegeneinander geneigten Stegflanken 25c und 25d gebildet, die in der Nähe der Wandung 5d ineinander übergehen.
Wie die Darstellung gemäß Fig. 5a erkennen läßt, bilden die Vorsprünge 25a eine durchgehende Wendel, wodurch zwischen der Wandung 5d und dem Rohrabschnitt 25 ein spiralförmig verlaufender Kühlkanal entsteht.
Das durch den Zuführabschnitt 7a eintretende Kühlmittel muß dementsprechend über eine Rücklaufleitung 24a in den Bereich des Auslaßabschnitts 7b zurückgeführt werden. Die Rücklaufleitung ist dabei (abweichend von der Ausführungsform gemäß Fig. 4) im wesentlichen außerhalb der Wandung 5d angeordnet.

Der von der Innenfläche 25e des Rohrabschnitts gebildete Durchmesser läßt sich dadurch verändern, daß der Endbereich 25f an einer Verschiebehülse 26 anliegt, die in Richtung des Doppelpfeils 27 beweglich am Tragrahmen 1 abgestützt ist und teilweise in die Kammer 2 hineinragt. Die Verschiebehülse 26 liegt innerhalb der Wandung 5d, welche in Höhe des Vorformlingsbodens 10a am Tragrahmen 1 befestigt ist.
Die Verstellung der Verschiebehülse 26 in Richtung auf die Anschlagfläche 5b hat zur Folge, daß sich der Durchmesser des über die Vorsprünge 25a abgestützten Rohrabschnitts verkleinert und dessen Innenfläche schließlich am Vorformling 10 zur Anlage kommt. Die Rückstellung des Rohrabschnitts 25 in die Öffnungsstellung wird durch Bewegen der Verschiebehülse 26 nach links ausgelöst.
Zum Ausbringen des Vorformlings 10 aus der Kühlröhre 5 wird der Auswerferstift 13 nebst Bodenkühleinsatz 18 nach rechts verfahren, nachdem der Rohrabschnitt 25 in die Öffnungsstellung überführt worden ist.

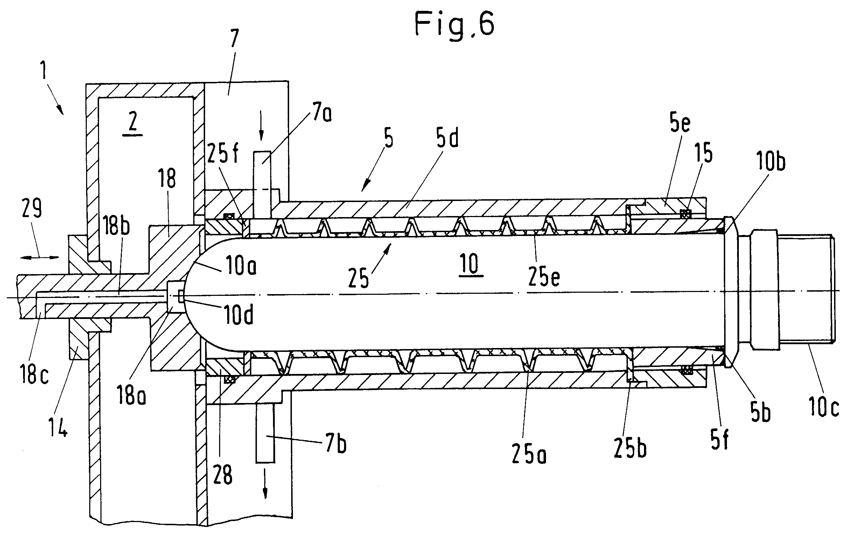

Die Ausführungsform gemäß Fig. 6 unterscheidet sich dadurch von der zuvor beschriebenen Ausgestaltung, daß die Verstellung des Faltenbalg-Rohrabschnitts 25 über den Bodenkühleinsatz 18 bewirkt wird. Dieser wirkt über eine an der Kühlleiste 7 beweglich geführte Verschiebehülse 28 auf den Endabschnitt 25f des Rohrabschnitts 25 ein. Wie aus der Druckschrift DE 42 12 115 A1 bekannt, ist der Bodenkühleinsatz 18 mit einer Senkbohrung 18a ausgestattet, die über einen Zentralkanal 18b außerhalb des Tragrahmens 1 in eine Querbohrung 18c übergeht. Nach dem Überführen des Bohrabschnitts in die Öffnungsstellung (durch Bewegen des Bodenkühleinsatzes 18 nach links) kann der Vorformling 10 dadurch aus der Kühlröhre 5 ausgestoßen werden, daß bei festgehaltenem Bodenkühleinsatz 18 über die Querbohrung 18c ein Druckmittel (vorzugsweise Druckluft) in die Senkbohrung 18a eingeleitet wird.
Die Verstellung des Bodenkühleinsatzes 18 zum Zwecke der Beeinflussung des Innendurchmessers der Innenfläche 25e ist durch einen Doppelpfeil 29 angedeutet.

Abweichend von den Ausführungsformen gemäß Fig. 3 und 4 kann der Erfindungsgegenstand als Halteelemente auch geradlinig ausgerichtete, d.h. nicht gewendelte Schlauchabschnitte aufweisen, in denen bereits Kühlkanäle vorhanden sind. Dabei kann jeder Schlauchabschnitt entweder einen durchgehenden Kühlkanal oder einen durch Zwischenwände gebildeten, spiralförmig verlaufenden Kühlkanal aufweisen.

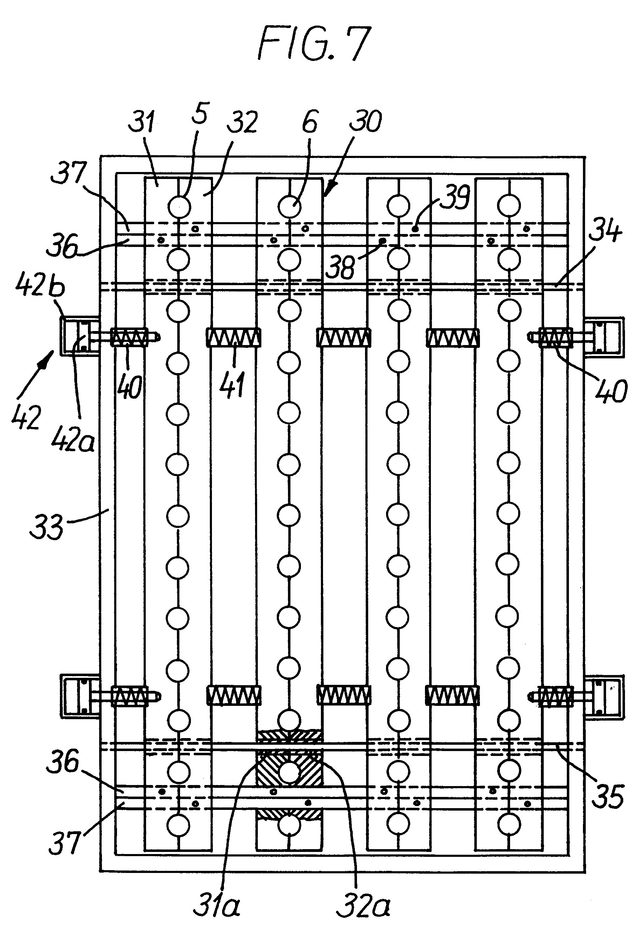

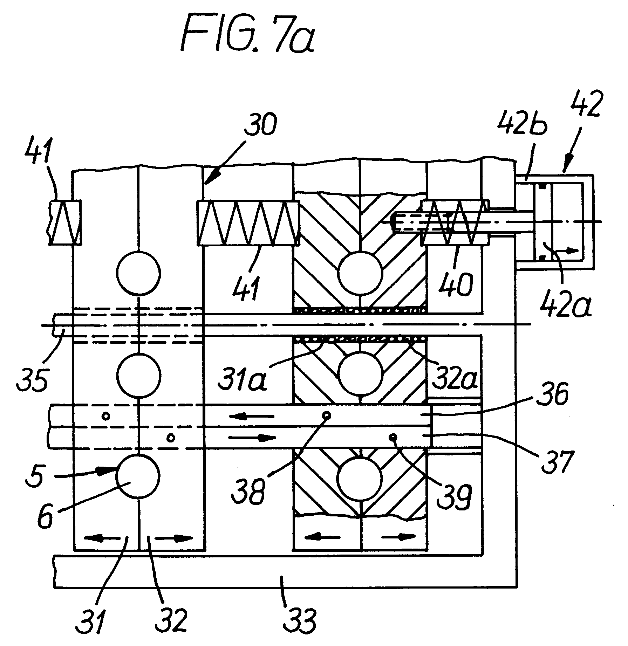

Wie in Fig. 7 und 7a dargestellt, kann der Erfindungsgegenstand derart ausgebildet sein, daß die Kühlröhren 5 jeweils in einem Klemmbackenpaar 30 ausgebildet sind, d.h. die Kühlröhren sind gemeinsamer Bestandteil der jeweils zusammenwirkenden Klemmbacken 31 und 32 des betreffenden Klemmbackenpaares.
In dem Ausführungsbeispiel sind vier Klemmbackenpaare 30 mit Abstand nebeneinanderliegend in einem geschlossenen Tragrahmen 33 gehalten; dieser ist in seinem oberen und unteren Drittel mit Führungsstangen 34 bzw. 35 ausgestattet, an denen sich die Klemmbacken 31, 32 der Klemmbackenpaare über Lager 31a bzw. 32a hin- und herbeweglich abstützen. Die Lager sind vorzugsweise (vgl. dazu Fig. 7a) als Rollen- oder Nadelwälzlager ausgebildet.

Oberhalb der Führungsstange 34 bzw. unterhalb der Führungsstange 35 sind die Klemmbacken über Mitnehmerleisten 36 bzw. 37 derart miteinander verbunden, daß gleichartig angeordnete Klemmbacken jeweils gleichzeitig gleichsinnige Bewegungen ausführen können: Die jeweils links liegende Klemmbacke 31 jedes Klemmbackenpaares ist über Bolzen 38 an den beiden Mitnehmerleisten 36 befestigt; im Gegensatz dazu stehen die jeweils rechts liegenden Klemmbacken 32 über Bolzen 39 mit den Mitnehmerleisten 37 in Verbindung. Die Mitnehmerleisten sind derart ausgebildet und angeordnet, daß sie sich in dem erforderlichen Ausmaß parallel zu den Führungsstangen 34 und 35 bezüglich des Tragrahmens hin- und herbewegen können. Fig. 7a läßt in diesem Zusammenhang erkennen, daß die Mitnehmerleisten 36 und 37 seitlich nur geringfügig über die am weitesten außen liegende Klemmbacke (hier: die letzte Klemmbacke 32) hinausragen und einen ausreichenden seitlichen Abstand zum Tragrahmen 33 aufweisen.
Sämtliche Klemmbackenpaare sind über vorgespannte Federelemente 40, 41 federnd aneinander bzw. an dem Tragrahmen abgestützt mit der Folge, daß an den jeweils zusammenwirkenden Klemmbacken 31, 32 jeweils eine in Richtung auf die Haltestellung wirksame Schließkraft angreift: Mit anderen Worten ausgedrückt, haben die zusammenwirkenden Klemmbacken unter Einwirkung der Federelemente die Tendenz, sich aufeinanderzuzubewegen und gegebenenfalls (wie in Fig. 7 und 7a dargestellt) aneinander zur Anlage zu kommen.

Im Ausführungsbeispiel sind die Federelemente 40 und 41 in zwei Reihen angeordnet, die jeweils auf der von den Mitnehmerleisten 36, 37 abgewandten Seite der Führungsstange 34 bzw. 35 liegen.
Während die Federelemente 41 zwischen den benachbarten Klemmbackenpaaren 30 angeordnet sind, stützen sich die außenliegenden Federelemente 40 einerseits an dem Tragrahmen 33 und andererseits - von links nach rechts gesehen - an der ersten Klemmbacke 31 bzw. an der letzten Klemmbacke 32 ab. An diesen beiden Klemmbacken sind außerdem die Kolben 42a zweier Pneumatikzylinder 42 befestigt, deren Gehäuse in Höhe der Federelemente 40 an dem Tragrahmen 33 gehalten ist. Die Pneumatikzylinder 42 bilden einen Verstellantrieb, unter dessen Einwirkung die Klemmbacken 31, 32 jedes Klemmbackenpaares in Richtung der von den Federelementen 40, 41 ausgehenden Schließkraft oder entgegen dieser relativ zueinander querverschoben werden können.
Falls die Kolben 42a in der Weise mit Druck beaufschlagt werden, daß sie sich auf den Tragrahmen 33 zubewegen, führen die Klemmbackenpaare 30 dementsprechend eine Schließbewegung aus; die entgegengerichtete Bewegung der Kolben 42a hat zur Folge, daß die Klemmbackenpaare - entgegen der Wirkung der an ihnen angreifenden Federelemente 40 bzw. 41 - eine Öffnungsbewegung ausführen.
Der aus den Pneumatikzylindern 42 bestehende Verstellantrieb gestattet es also, die Klemmbackenpaare 30 für das Ein- und Ausbringen von Vorformlingen zu öffnen, wozu normalerweise ein Hub in der Größenordnung von nur wenigen Millimetern ausgeführt werden muß. Andererseits können die Klemmbackenpaare unter Einwirkung des Verstellantriebs in kurzer Zeit in Richtung auf ihre Haltestellung bewegt werden, in welcher - nach Drucklosschalten der Pneumatikzylinder 42 - nur noch die Federelemente 40, 41 wirksam sind. Diese stellen sicher, daß die zusammenwirkenden Klemmbacken 31 und 32 sich der Schrumpfung der Vorformlinge entsprechend selbsttätig aufeinanderzubewegen und dadurch eine Zentrierung und intensive Kühlung ermöglichen.

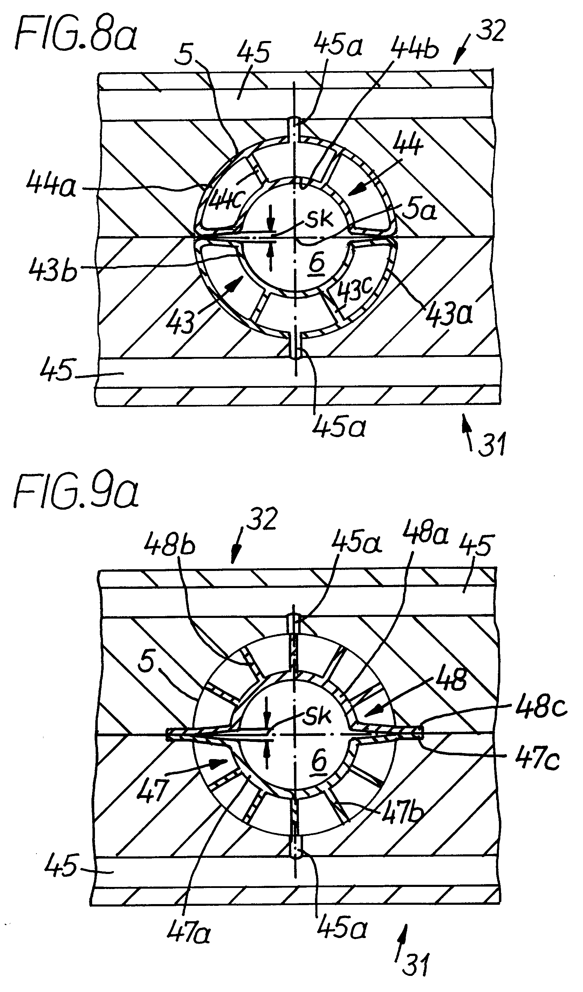

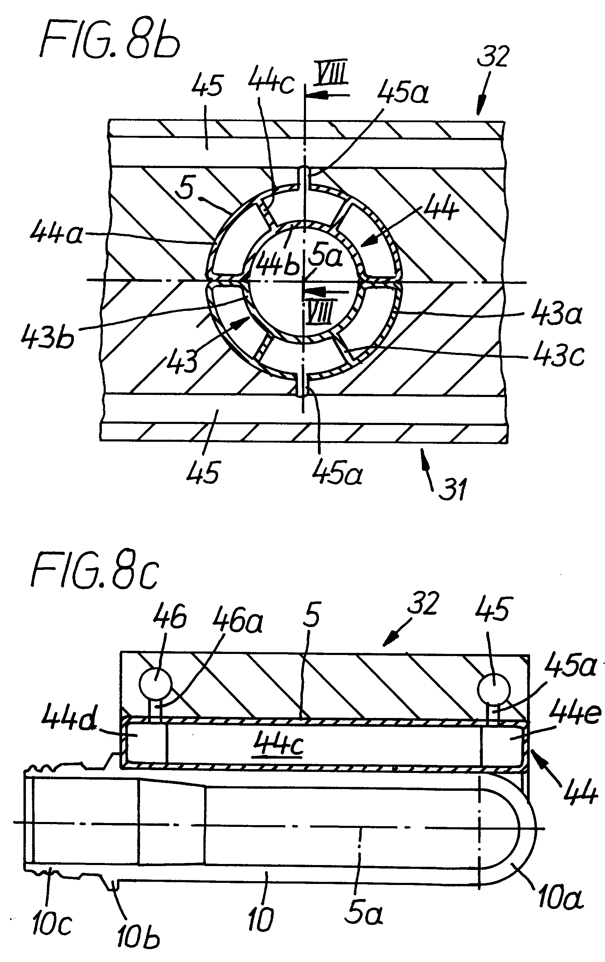

Bei der Ausführungsform gemäß Fig. 8a bis 8c sind die Kühlröhren 5 - die in den jeweils zusammenwirkenden Klemmbacken 31 und 32 ausgebildet sind - jeweils mit zwei Halteelementen in Gestalt elastisch verformbarer Hohlkörper 43 bzw. 44 ausgestattet. Die jeweils eine Halbschale bildenden Hohlkörper 43, 44 sind über ihre kreisbogenförmige Außenfläche 43a bzw. 44a lediglich an der zugehörigen Klemmbacke 31 bzw. 32 befestigt und weisen Innenflächen 43b, 44b auf, die (wie in Fig. 8b angedeutet) in der Haltestellung im Querschnitt miteinander einen kreisförmigen Querschnitt begrenzen, welcher den Aufnahmeraum 6 für einen Vorformling 10 (vgl. Fig. 8c) begrenzt. Die Hohlkörper 43 und 44 weisen jeweils innenliegende, zumindest annähernd radial ausgebildete Längswände 43c bzw. 44c auf, welche den betreffenden Hohlkörper außerhalb seines Anfangs- und Endbereichs in Längskammern unterteilen.
In den Klemmbacken 31, 32 sind Zuführkanäle 45 und Rücklaufkanäle 46 angebracht, die außerhalb des Bereichs der Längswände 43c, 44c über Querbohrungen 45a bzw. 46a in die Hohlkörper 43 bzw. 44 einmünden. Beispielsweise wird der Hohlkörper 44 (vgl. dazu Fig. 8a) in der Weise gekühlt, daß das den Zuführkanal 45 durchströmende Kühlmittel über die Querbohrung 45a im Endbereich 44e in den Hohlkörper eintritt, diesen von rechts nach links durchströmt und im Anfangsbereich (d.h. in der Nähe der Gewindeabschlußschulter 10b des Vorformlings 10) durch die Querbohrung 46a in den Rücklaufkanal 46 austritt. Entsprechendes gilt für die Kühlung des Hohlkörpers 43.
Dem erfindungsgemäßen Lösungsgedanken entsprechend sind die Hohlkörper 43 und 44 in der Weise angeordnet und ausgebildet, daß die miteinander zusammenwirkenden Innenflächen 43b und 44b in der Haltestellung einen zumindest annähernd kreisförmigen Querschnitt begrenzen. Nachdem die zusammenwirkenden Klemmbacken 31 und 32 aneinander zur Anlage gekommen sind (Fig. 8a), ist zwischen den Innenflächen zunächst ein keilförmiger Spalt sk vorhanden, der in Anpassung an die Schrumpfung des Vorformlings allmählich kleiner wird, bis die Innenflächen 43b und 44b ggf. vollständig aneinander anliegen und dann einen geschlossenen Kreisquerschnitt begrenzen (Fig. 8b).

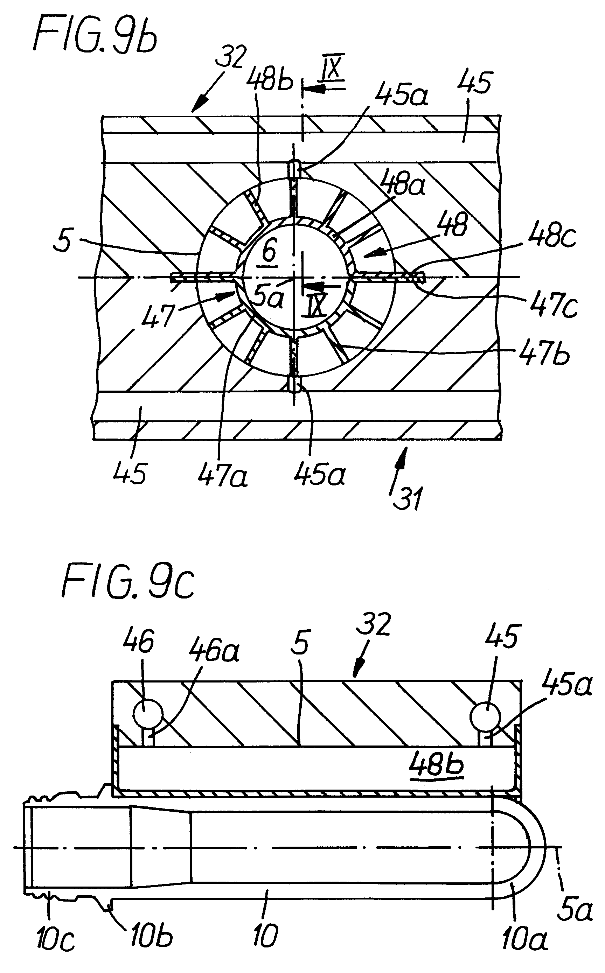

Die Ausführungsform gemäß Fig. 9a bis c unterscheidet sich dadurch von der zuvor beschriebenen Ausführungsform, daß die den zusammenwirkenden Klemmbacken 31, 32 zugeordneten Halteelemente als Halbrohrkörper 47 bzw. 48 ausgebildet sind, welche auf der von ihren Innenflächen 47a bzw. 48a abgewandten Seite mit Längsrippen 47b, 48b ausgestattet sind; diese stützen sich an der die Kühlröhre 5 begrenzenden Wand der zugehörigen Klemmbacke 31 bzw. 32 ab.
Die Abdichtung der Halbrohrkörper 47 bzw. 48 gegenüber der zugehörigen Klemmbacke 31 bzw. 32 erfolgt über länger ausgeführte, entsprechend befestigte Längsrippen 47c, 48c.
Wie die Darstellung gemäß Fig. 9a erkennen läßt, ist nach dem Zusammenfahren der Klemmbacken zwischen den Innenflächen 47a und 48a zunächst ebenfalls ein keilförmiger Spalt sk vorhanden, welcher es gestattet, den von den Innenflächen begrenzten Querschnitt an die sich während des Kühlvorgangs einstellende Querschnittsänderung des aufgenommenen Vorformlings anzupassen. Fig. 9b zeigt die Halbrohrkörper 47 bzw. 48 in der Endstellung, in welcher der keilförmige Spalt sk verschwunden ist und die Innenflächen 47a, 48a einschließlich ihrer Längsrippen 47c, 48c aneinander anliegen.

Ebenso wie im Fall der Ausführungsform gemäß Fig. 8a bis c kann bei der zuletzt beschriebenen Ausführungsform die erforderliche elastische Verformbarkeit dadurch erzielt werden, daß der auf die Innenflächen 47a, 48a einwirkende Kühlmitteldruck entsprechend eingestellt wird.

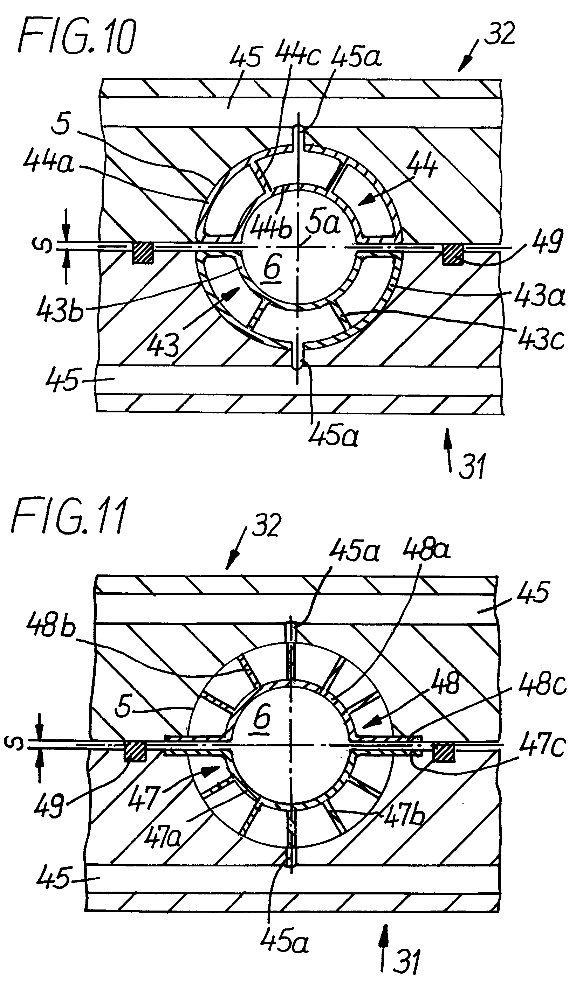

Die Ausführungsformen gemäß Fig. 10 und 11 unterscheiden sich dadurch von den Ausführungsformen gemäß Fig. 8a bis c bzw. Fig. 9a bis c, daß die Klemmbacke 31 jedes Klemmbackenpaares mit Abstandselementen 49 ausgestattet ist; über diese stützen sich die zusammenwirkenden Klemmbacken 31, 32 in der Schließstellung unter Bildung eines Spaltes s aneinander ab.
Der Spalt ist dabei so bemessen, daß sich die Teile 43, 44 bzw. 47, 48 über ihre Innenflächen 43b, 44b bzw. 47a, 48a der durch den Kühlvorgang hervorgerufenen Schrumpfung des von ihnen umschlossenen Vorformlings anpassen können.

Der Erfindungsgegenstand kann insbesondere auch derart ausgebildet sein, daß die Halteelemente jedes Klemmbackenpaares jeweils an beiden zusammenwirkenden Klemmbacken befestigt sind. Dies setzt voraus, daß jedes Halteelement eine nicht unterbrochene Innenfläche aufweist, die in der Haltestellung im Querschnitt kreisförmig ausgebildet ist. Die Innenfläche muß dabei derart ausgestaltet sein, daß sie sich mit der Bewegung der Klemmbacken relativ zueinander ausreichend dehnen bzw. zusammenziehen kann.

Der mit der Erfindung erzielte Vorteil besteht insbesondere darin, daß durch Verwendung verhältnismäßig einfach aufgebauter Halteelemente, die zumindest elastisch verformbare Innenflächen aufweisen, die Lage der den Vorformling umgebenden Innenfläche zur Erzielung einer ausreichenden Zentrierung und wirksamen Kühlung feinfühlig eingestellt werden kann, und zwar gegebenenfalls unter Einwirkung des ohnehin vorhandenen Kühlmittels.

## Patentansprüche

1. Transporteinrichtung zum Halten und Kühlen noch warmer Vorformlinge (10), mit einem Tragrahmen (1, 33) und an diesem gehaltenen, der Aufnahme jeweils eines Vorformlings dienenden Kühlröhren (5), die auf ihrer vom Tragrahmen (1, 33) abgewandten Seite eine Durchtrittsöffnung (5c) nebst Anschlagfläche (5b) für die Gewindeabschlußschulter (10b) des aufzunehmenden Vorformlings und innenliegende, mit einem Kühlmittel beaufschlagbare Kühlkanäle aufweisen, die an eine Kühlmittelführung angeschlossen und derart ausgebildet sind, daß die in den Kühlröhren (5) befindlichen Formformlinge (10) der vom Kühlmittel ausgehenden Kühlwirkung ausgesetzt sind, **gekennzeichnet** durch folgende Merkmale:
- die Kühlröhren (5) weisen innenliegende, elastisch verformbare Halteelemente (19, 23; 25; 43, 44; 47, 48) mit den Vorformlingen (10) zugewandten, im Querschnitt kreisförmigen Innenflächen (19c, 23b bzw. 25e) oder paarweise zusammenwirkenden, im Querschnitt halbkreisförmigen Innenflächen (43b, 44b bzw. 47a, 48a) auf, deren Anfangsbereich in der Nähe der Anschlagfläche (5b) liegt und die sich zumindest bis den Bereich des Vorformlingsbodens (10a) erstrecken;
- die Innenflächen (19c, 23b, 25e, 43b, 44b, 47a, 48a)) können zwischen einer Öffnungsstellung und einer durch Aufbringen äußerer Kräfte hervorgerufenen Haltestellung derart verändert werden, daß in der letzteren die Innenflächen zumindest über den größten Teil ihrer Längserstreckung nachgiebig an den Vorformlingen (10) anliegen, wobei in der Öffnungsstellung der von den Innenflächen festgelegte Querschnitt allseitig größer ist als derjenige der Vorformlinge, und
- die Halteelemente (19, 23, 25, 43, 44, 47, 48) sind derart ausgebildet, daß sie zumindest einen Teil der Wandung der in Richtung auf die Vorformlinge (10) geschlossenen Kühlkanäle darstellen.

2. Einrichtung nach Anspruch 1, gekennzeichnet durch folgende Merkmale:
- die Kühlröhren (5) sind in zumindest einem Klemmbackenpaar (30) ausgebildet, wobei die Kühlröhren Halteelemente (43, 44 bzw. 47, 48) aufweisen, die in der Haltestellung einen Kreisquerschnitt begrenzen;
- die Klemmbacken (31, 32) jedes Klemmbackenpaares (30) sind quer zur Längserstreckung der Kühlröhren (5) federnd derart abgestützt, daß eine in Richtung auf die Haltestellung wirksame Schließkraft vorhanden sind, und
- die Klemmbacken (31, 32) jedes Klemmbackenpaares (30) sind mittels eines Verstellantriebs (42) in Richtung oder entgegen der Schließkraft relativ zueinander querverschiebbar.

3. Einrichtung nach Anspruch 2, dadurch gekennzeichnet, daß mehrere Klemmbackenpaare (30) jeweils federnd aneinander abgestützt nebeneinander angeordnet sind.

4. Einrichtung nach zumindest einem der Ansprüche 2 bis 3, dadurch gekennzeichnet, daß die Klemmbacken (31, 32) über den Verstellantrieb (42) derart gekuppelt sind, daß gleichartig angeordnete Klemmbacken jedes Klemmbackenpaares (30) jeweils gleichzeitig und gleichsinnig bewegt werden.

5. Einrichtung nach zumindest einem der vorhergehenden Ansprüche 2 bis 4, dadurch gekennzeichnet, daß die Halteelemente jedes Klemmbackenpaares (30) jeweils an beiden Klemmbacken (31, 32) befestigt sind.

6. Einrichtung nach zumindest einem der Ansprüche 2 bis 4, dadurch gekennzeichnet, daß die Halteelemente (43, 44; 47, 48) jeder Klemmbacke (31, 32) jeweils eine im Querschnitt halbkreisförmige Innenfläche (43b, 44b bzw. 47a, 48a) aufweisen und lediglich jeweils an einer Klemmbacke (31 bzw. 32) befestigt sind, wobei die Innenflächen der Klemmbacken jedes Klemmbackenpaares (30) in der Haltestellung miteinander einen kreisförmigen Querschnitt begrenzen.

7. Einrichtung nach zumindest einem der vorhergehenden Ansprüche, dadurch gekennzeichnet, daß die Halteelemente jeweils als Hohlkörper (43, 44) ausgebildet sind.

8. Einrichtung nach Anspruch 7, dadurch gekennzeichnet, daß der Hohlkörper (43, 44) innenliegende Längswände (43c, 44c) aufweist.

9. Einrichtung nach zumindest einem der Ansprüche 1 bis 6, dadurch gekennzeichnet, daß die Halteelemente jeweils aus einem Schlauchabschnitt (19) bestehen, der außerhalb des Bereichs seiner Innenfläche (19c) bezüglich der Kühlröhre (5) ortsfest gehalten ist.

10. Einrichtung nach Anspruch 9, dadurch gekennzeichnet, daß der Schlauchabschnitt (19) auf seiner der Innenfläche (19c) gegenüberliegenden Seite vorspringende Längsrippen (21) aufweist.

11. Einrichtung nach Anspruch 9 oder 10, dadurch gekennzeichnet, daß zwischen den Schlauchabschnitten (19) und der Wandung (5d) der Kühlröhren (5) ein mit einem Kühlmittel beaufschlagbarer Kühlmittelraum (22) vorhanden ist.

12. Einrichtung nach zumindest einem der Ansprüche 9 bis 11, dadurch gekennzeichnet, daß der Anfangs- und Endbereich (19a, 19b) des Schlauchabschnitts (19) im Querschnitt U-förmig ausgebildet ist und zumindest der außenliegende Schenkel (19d) des Anfangsbereichs (19a) sich an der Wandung (5d) der Kühlröhre (5) abstützt.

13. Einrichtung nach Anspruch 1, dadurch gekennzeichnet, daß die Halteelemente jeweils aus einem im Außenquerschnitt rechteckförmigen Schlauchabschnitt (23) bestehen, der innerhalb der Wandung (5d) der Kühlröhre (5) gewendelt gehalten ist und dessen spiralförmig verlaufender Hohlraum (23a) von einem Kühlmittel durchflossen wird.

14. Einrichtung nach Anspruch 13, dadurch gekennzeichnet, daß der gewendelte Schlauchabschnitt (23) in der Weise angeordnet ist, daß er auf der von der Wandung (5d) der Kühlröhre (5) abgewandten Seite eine zumindest annähernd durchgehende Innenfläche (23b) bildet.

15. Einrichtung nach Anspruch 14, dadurch gekennzeichnet, daß die Halteelemente jeweils aus einem Rohrabschnitt (25) bestehen, der nach Art eines Faltenbalges ausgebildet ist und sich über in Richtung auf den Außenmantel (5d) der Kühlröhre (5) vorkragende Vorsprünge (25a) nach außen abstützt.

16. Einrichtung nach Anspruch 15, dadurch gekennzeichnet, daß der zwischen dem Rohrabschnitt (25) und der Wandung (5d) der Kühlröhre (5) vorhandene Zwischenraum von einem Kühlmittel durchflossen ist.

17. Einrichtung nach zumindest einem der Ansprüche 15 bis 16, dadurch gekennzeichnet, daß die Vorsprünge (25a) eine Wendel bilden, deren Spitze an der Wandung (5d) der Kühlröhre (5) anliegt.

18. Einrichtung nach zumindest einem der Ansprüche 15 bis 17, dadurch gekennzeichnet, daß der Rohrabschnitt (25) über ein Stellelement (26 bzw. 18) bezüglich seines ortsfesten Anfangsbereichs (25b) verschiebbar ist.
